# EUROPEAN PATENT APPLICATION

(11) **EP 4 541 451 A1**
(43) Date of publication of application: **23.04.2025**
(21) Application number: 23842818.9
(22) Date of filing: 04.07.2023
(51) Int. Cl.: B01D 53/26, C25B 1/04

(54) **DEHUMIDIFICATION APPARATUS, HYDROGEN PRODUCTION EQUIPMENT, AND METHOD FOR OPERATING DEHUMIDIFICATION APPARATUS**

(30) Priority: 22.07.2022 JP 2022117276
(71) Applicant: Mitsubishi Heavy Industries, Ltd., Tokyo 100-8332 (JP)
(72) Inventor: KURODA, Takuji, Tokyo 100-8332 (JP); ICHINOSE, Hikaru, Tokyo 100-8332 (JP); YOSHIMOTO, Toshizumi, Tokyo 100-8332 (JP); TAMURA, Ken, Tokyo 100-8332 (JP)
(74) Representative: Studio Torta S.p.A.
(86) International application number: PCT/JP2023/024772
(87) International publication number: WO 2024/018893

(57) **Abstract**

This dehumidification apparatus is for dehumidifying a hydrogen gas that is produced by a hydrogen production device, the dehumidification apparatus comprising: a dehumidifier that includes an adsorption tower, inside of which there is provided an adsorbent that is capable of adsorbing moisture contained in the hydrogen gas; an inlet line for introducing the hydrogen gas from the hydrogen production device into the dehumidifier; an inlet valve that is provided to the inlet line; an outlet line for discharging the hydrogen gas that is dehumidified by the dehumidifier out from the dehumidifier; an outlet valve that is provided to the outlet line; and a control device that is configured to adjust the opening degree of the inlet valve and the opening degree of the outlet valve on the basis of the pressure within the adsorption tower during activation of the dehumidification apparatus.

## Description

### Technical Field

The present disclosure relates to a dehumidification apparatus, hydrogen production equipment, and a method for operating a dehumidification apparatus.

Priority is claimed on Japanese Patent Application No. 2022-117276, filed July 22, 2022, the content of which is incorporated herein by reference.

### Background Art

A water electrolysis device is used to produce hydrogen in some cases. Hydrogen generated in an electrolytic tank of the water electrolysis device is discharged from the electrolytic tank together with moisture. Because of this, hydrogen discharged from the electrolytic tank is usually dehumidified by a dehumidifier, and then is stored and used.

Patent Document 1 discloses a dehumidification apparatus configured to dehumidify hydrogen generated by a water electrolysis device while using a dehumidifier including an adsorbent capable of adsorbing moisture.

### Citation List

### Patent Literature

Patent Document 1: JP 2020-199433 A

### Summary of Invention

### Technical Problem

When hydrogen production equipment is activated, a hydrogen gas is introduced into a dehumidifier to raise the pressure therein to a predetermined pressure (for example, a pressure at the time of hydrogen production operation of the hydrogen production equipment), and the moisture contained in the gas in the dehumidifier is dehumidified. Thereafter, the hydrogen gas from the dehumidifier is supplied to a storage unit, hydrogen consumption equipment, or the like. In the related art, when the pressure is introduced into the dehumidifier as described above, manual valves provided at an inlet and an outlet of the dehumidifier are used to manually operate the opening degrees of the valves, thereby performing the pressure introduction work.

On the other hand, in a case where regenerative energy is used as power supplied to the hydrogen production device, or the like, when hydrogen is produced accompanying power fluctuations or when hydrogen is produced in response to demand fluctuations of the demanding side, the frequency of switching between the operation and the stop of the hydrogen production device increases. Thus, the frequency of pressure introduction into the dehumidifier is considered to increase. Therefore, it is desired to improve the efficiency of work of pressure introduction into the dehumidifier when the hydrogen production equipment is activated.

In view of the above-described circumstances, an object of at least one embodiment of the present invention is to provide a dehumidification apparatus, hydrogen production equipment, and a method for operating the dehumidification apparatus, which are capable of improving the efficiency of work of pressure introduction into the dehumidifier when the hydrogen production equipment is activated.

### Solution to Problem

A dehumidification apparatus according to at least one embodiment of the present invention is a dehumidification apparatus configured to dehumidify a hydrogen gas produced by a hydrogen production device, the dehumidification apparatus including:
a dehumidifier including an adsorption tower in which an adsorbent capable of adsorbing moisture contained in the hydrogen gas is provided;
an inlet line configured to introduce the hydrogen gas from the hydrogen production device into the dehumidifier;
an inlet valve provided in the inlet line;
an outlet line configured to discharge the hydrogen gas dehumidified by the dehumidifier, from the dehumidifier;
an outlet valve provided in the outlet line; and
a control device configured to adjust an opening degree of the inlet valve and an opening degree of the outlet valve based on pressure in the adsorption tower at an activation time of the dehumidification apparatus.

Hydrogen production equipment according to at least one embodiment of the present invention includes:
a hydrogen production device; and
the above-described dehumidification apparatus configured to dehumidify a hydrogen gas produced by the hydrogen production device.

A method for operating a dehumidification apparatus according to at least one embodiment of the present invention is a method for operating a dehumidification apparatus configured to dehumidify a hydrogen gas produced by a hydrogen production device, the dehumidification apparatus including
a dehumidifier including an adsorption tower in which an adsorbent capable of adsorbing moisture contained in the hydrogen gas is provided;
an inlet line configured to introduce the hydrogen gas from the hydrogen production device into the dehumidifier,
an inlet valve provided in the inlet line,
an outlet line configured to discharge the hydrogen gas dehumidified by the dehumidifier, from the dehumidifier, and
an outlet valve provided in the outlet line, the method including:
   measuring pressure in the adsorption tower; and
   activating the dehumidification apparatus while adjusting an opening degree of the inlet valve and an opening degree of the outlet valve based on the pressure in the adsorption tower.

### Advantageous Effects of Invention

According to at least one embodiment of the present invention, there are provided a dehumidification apparatus, hydrogen production equipment, and a method for operating the dehumidification apparatus, which are capable of improving the efficiency of work of pressure introduction into a dehumidifier when the hydrogen production equipment is activated.

### Brief Description of Drawings

FIG. 1 is a schematic diagram of hydrogen production equipment applied with a dehumidification apparatus according to one embodiment.
FIG. 2 is a graph depicting an example of a temporal change in pressure inside an adsorption tower in a method for operating a dehumidification apparatus according to one embodiment.

### Description of Embodiments

Hereinafter, some embodiments of the present invention will be described with reference to the accompanying drawings. However, the dimensions, materials, shapes, relative arrangements, or the like of the components described as embodiments or illustrated in the drawings are not intended to limit the scope of the present invention, but are merely illustrative examples.

### Configuration of Hydrogen Production Equipment

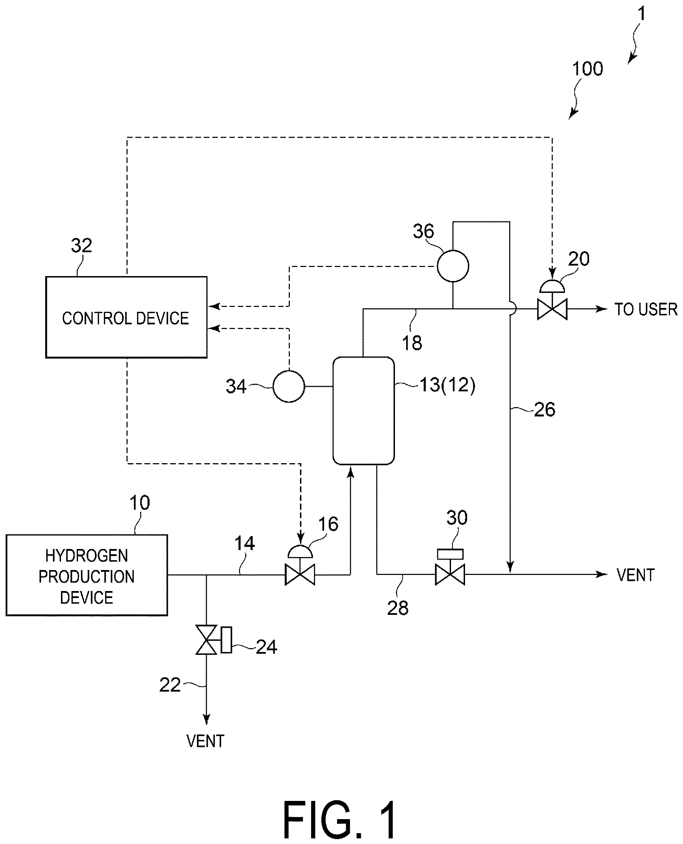

FIG. 1 is a schematic diagram of hydrogen production equipment applied with a dehumidification apparatus according to some embodiments. As illustrated in FIG. 1, hydrogen production equipment 1 includes a hydrogen production device 10 configured to produce hydrogen and a dehumidification apparatus 100 configured to dehumidify a hydrogen gas produced by the hydrogen production device 10.

The hydrogen production device 10 may include a water electrolysis device configured to electrolyze water to generate hydrogen and oxygen. The water electrolysis device may be, for example, an alkaline water electrolysis device, a polymer electrolyte membrane (PEM) water electrolysis device, or an anion exchange membrane (AEM) water electrolysis device.

The water electrolysis device includes an electrolytic tank for electrolyzing water. Water is supplied to the electrolytic tank. The electrolytic tank is supplied with a current via a rectifier. Thus, when a voltage is applied between a pair of electrodes provided in the electrolytic tank to flow a current, water in the electrolytic tank is electrolyzed, whereby hydrogen is generated at the cathode side, and oxygen is generated at the anode side. Water in which an electrolyte is dissolved (electrolyte solution) may be supplied into the electrolytic tank, and the water (water constituting the electrolyte solution) may be electrolyzed. The electrolyte may be an alkaline substance such as potassium hydroxide (KOH).

A hydrogen gas generated in the electrolytic tank of the water electrolysis device is discharged from the electrolytic tank together with moisture. The hydrogen gas discharged from the electrolytic tank is guided to the dehumidification apparatus 100 to remove moisture. The hydrogen gas generated in the electrolytic tank may be guided to a gas-liquid separator to separate moisture, and then guided to the dehumidification apparatus 100. In this case, the hydrogen gas guided from the gas-liquid separator to the dehumidification apparatus 100 contains moisture by an amount equivalent to the saturated steam.

The oxygen generated by the water electrolysis device may be discharged from the electrolytic tank, and then used in a device using oxygen or released to the outside.

The dehumidification apparatus 100 includes a dehumidifier 12, an inlet line 14 for introducing a hydrogen gas into the dehumidifier 12, an inlet valve 16 provided in the inlet line 14, an outlet line 18 for discharging the hydrogen gas dehumidified by the dehumidifier 12, from the dehumidifier 12, and an outlet valve 20 provided in the outlet line 18. The dehumidification apparatus 100 includes a control device 32 configured to control the inlet valve 16 and the outlet valve 20.

The dehumidifier 12 includes an adsorption tower 13, and an adsorbent provided inside the adsorption tower 13 and capable of adsorbing moisture. The inlet line 14 is provided between the hydrogen production device 10 and the adsorption tower 13, and is configured to guide the hydrogen gas (hydrogen gas containing moisture) from the hydrogen production device 10 to the dehumidifier 12. The outlet line 18 is configured to discharge the hydrogen gas dehumidified in the adsorption tower 13, from the adsorption tower 13. That is, the hydrogen gas introduced into the dehumidifier 12 through the inlet line 14 is dehumidified by the adsorbent and then discharged from the dehumidifier 12.

The hydrogen gas discharged from the dehumidifier 12 through the outlet line 18 (i.e., the dehumidified hydrogen gas) may be stored in a storage unit (tank) or the like, or may be supplied to hydrogen consumption equipment (a user). The hydrogen consumption equipment may include, for example, hydrogen combustion equipment configured to burn hydrogen (e.g., a gas turbine facility or an iron manufacturing facility), hydrogen liquefaction equipment configured to liquefy hydrogen, equipment configured to generate electricity by a chemical reaction using hydrogen as a fuel (e.g., a power generation facility including a fuel cell such as a solid oxide fuel cell (SOFC)), equipment configured to produce fuel using hydrogen as feedstock (e.g., a fuel synthesis facility), or a hydrogen gas station configured to supply hydrogen to a device.

The dehumidification apparatus 100 includes a pressure measuring unit 34 (a pressure sensor such as a pressure transmitter) configured to measure the pressure inside the adsorption tower 13. An electric signal indicating the pressure measured by the pressure measuring unit 34 is sent to the control device 32.

The dehumidification apparatus 100 includes a dew point measuring unit 36 configured to measure the dew point of the hydrogen gas discharged from the adsorption tower 13. An electric signal indicating the dew point measured by the dew point measuring unit 36 is sent to the control device 32.

The dew point measuring unit 36 may be configured to measure the dew point of the hydrogen gas in the outlet line 18. For example, as illustrated in FIG. 1, the dew point measuring unit 36 may be configured to measure the dew point of the hydrogen gas guided to a dew point measurement line 26 branched from the outlet line 18 at the upstream side of the outlet valve 20. The hydrogen gas subjected to the dew point measurement by the dew point measuring unit 36 may be discharged to the outside of the system through the dew point measurement line 26.

As illustrated in FIG. 1, the dehumidification apparatus 100 may include a first vent line 22 branched from the inlet line 14 and a first vent valve 24 provided in the first vent line 22. The first vent line 22 is configured to be able to release the hydrogen gas flowing into the first vent line 22 from the inlet line 14, to the outside.

As illustrated in FIG. 1, the dehumidification apparatus 100 may include a second vent line 28 connected to the adsorption tower 13 and configured to release the hydrogen gas from the adsorption tower 13 to the outside, and a second vent valve 30 provided in the second vent line 28. The second vent line 28 functions as a line for discharging, from the adsorption tower 13, a regenerative gas supplied to regenerate the adsorbent when the adsorbent provided inside the adsorption tower 13 is regenerated. During the activation of the hydrogen production equipment 1 and the dehumidification apparatus 100, the second vent valve 30 is basically closed.

As illustrated in FIG. 1, the dew point measurement line 26 provided with the dew point measuring unit 36 may be connected to the second vent line 28 at the downstream side of the second vent valve 30.

The control device 32 is configured to adjust the opening degrees of the inlet valve 16 and the outlet valve 20 based on the measured value of the pressure inside the adsorption tower 13 received from the pressure measuring unit 34 and/or the measured value of the dew point received from the dew point measuring unit 36. The control device 32 may be configured to control the open/close of the first vent valve 24 and/or the second vent valve 30.

The control device 32 includes a computer provided with a processor (a CPU or the like), a primary storage device (a memory device; a RAM or the like), an auxiliary storage device, an interface, and the like. The control device 32 receives signals from the pressure measuring unit 34 and/or the dew point measuring unit 36 via the interface. The processor is configured to process the signal received in this manner. In addition, the processor is configured to process programs loaded in the primary storage device.

The processing contents of the control device 32 are implemented as programs to be executed by the processor. The programs may be stored in, for example, the auxiliary storage device. When the programs are executed, the programs are loaded in the primary storage device. The processor is configured to read the programs from the primary storage device and execute instructions included in the programs.

When the hydrogen production equipment 1 is activated, a hydrogen gas is introduced into the dehumidifier 12 to increase the pressure therein to a predetermined pressure (for example, a pressure at the rated operation time of the hydrogen production equipment 1), and the moisture contained in the gas in the dehumidifier 12 is dehumidified. Thereafter, the hydrogen gas from the dehumidifier 12 is supplied to a storage unit, hydrogen consumption equipment, or the like.

In this regard, in the dehumidification apparatus 100 according to the above-described embodiment, since the opening degrees of the inlet valve 16 and the outlet valve 20 provided in the inlet line 14 and the outlet line 18, respectively, and connected to the dehumidifier 12 are adjusted by the control device 32, the pressure can be introduced into the dehumidifier 12 efficiently and reliably as compared with the case where the valve opening degrees are manually adjusted. Therefore, the dehumidification apparatus 100 can be activated efficiently and reliably. That is, it is possible to improve the efficiency of work of introducing pressure into the dehumidifier 12 at the activation time of the hydrogen production equipment 1.

### Activation Flow of Dehumidification Apparatus

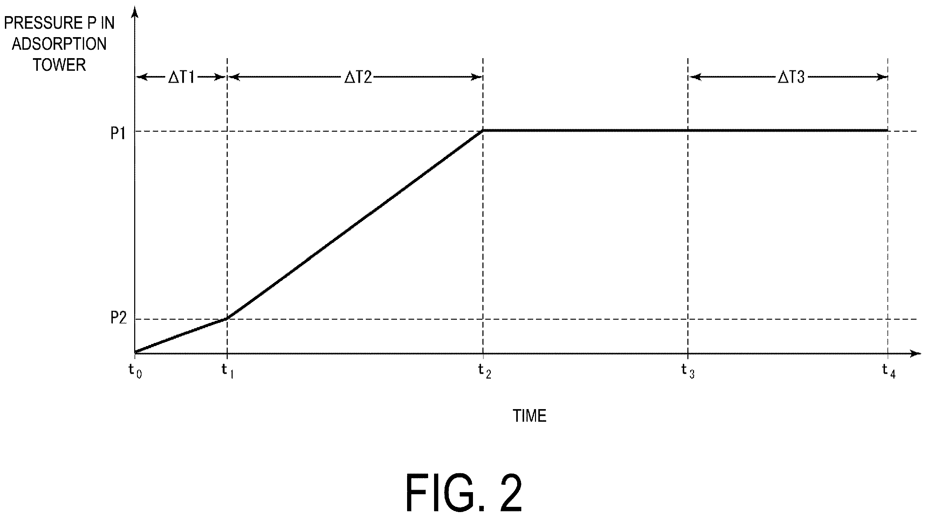

Next, an operation method of the dehumidification apparatus 100 according to one embodiment will be described. The operation method described below is an example of the operation method when the dehumidification apparatus 100 is activated. FIG. 2 is a graph depicting an example of a temporal change in pressure inside the adsorption tower 13 in the operation method of the dehumidification apparatus according to one embodiment. In the following description, the opening degree control of the inlet valve 16 and the outlet valve 20 and the open/close control of the first vent valve 24 and the second vent valve 30 are performed using the control device 32. However, in some embodiments, at least any one of the opening degree control for the inlet valve 16 and the outlet valve 20, the first vent valve 24, or the second vent valve 30 may be manually opened/closed.

At the start of activation of the dehumidification apparatus 100 (time t0 in the graph of FIG. 2), the inlet valve 16, the outlet valve 20 and the second vent valve 30 are closed, while the first vent valve 24 is opened. That is, a hydrogen gas from the hydrogen production device 10 is released to the outside through the first vent line 22.

In one embodiment, when the dehumidification apparatus 100 is activated, the opening degree of the inlet valve 16 is adjusted in such a manner that the pressure in the adsorption tower 13 (i.e., the measured value of the pressure by the pressure measuring unit 34) is increased to a prescribed first pressure P1 (e.g., the pressure at the rated operation time of the hydrogen production equipment) at a prescribed pressure increase rate (time t0 to time t2 in FIG. 2) in a state where the outlet valve 20 is closed. In this way, the hydrogen gas (pressure) from the hydrogen production device 10 is introduced into the adsorption tower 13. During this time, of the hydrogen gas from the hydrogen production device 10, a part of the hydrogen gas that is not introduced into the adsorption tower 13 is released to the outside through the first vent line 22.

Thereafter, in the state where the outlet valve 20 is closed, the degree of opening of the inlet valve 16 is adjusted in such a manner that the pressure in the adsorption towers 13 is maintained at the first pressure P1 (time t2 to time t3 in FIG. 2) until the dew point of the hydrogen gas discharged from the adsorption tower 13 (i.e., the measured value of the dew point by the dew point measuring units 36) decreases down to a prescribed value (i.e., until the hydrogen gas is sufficiently dehumidified in the adsorption tower 13). During this time, part of the hydrogen gas in the adsorption tower 13 is released to the outside through the dew point measurement line 26 and the second vent line 28. Accordingly, the dew point measured by the dew point measuring unit 36 may change. The opening degree of the inlet valves 16 may be maintained constant while the pressure in the adsorption towers 13 is maintained at the first pressure P1 (time t2 to time t3 in FIG. 2), until the dew point of the hydrogen gas discharged from the adsorption tower 13 decreases down to the prescribed value.

Next, when the dew point reaches the prescribed value (time t3 in FIG. 2), the first vent valve 24 is closed and the opening degree of the outlet valve 20 is adjusted to maintain the pressure in the adsorption towers 13 at the first pressure P1 (time t3 to time t4 in FIG. 2). At this time, as illustrated in FIG. 2, the first vent valve 24 may be closed over a prescribed length of time ΔT3, and the opening degree of the outlet valve 20 may be gradually increased to maintain the pressure in the adsorption tower 13 at the first pressure P1. When the first vent valve 24 is closed in this manner, the activation of the dehumidifier 12 is completed and the supply of the hydrogen gas at a predetermined pressure through the outlet line 18 is started.

As discussed above, in the operation method according to the above-described embodiment, since the opening degrees of the inlet valve 16 and the outlet valve 20 provided in the inlet line 14 and the outlet line 18, respectively, and connected to the dehumidifier 12 are adjusted by the control device 32, the pressure can be introduced into the dehumidifier 12 efficiently and reliably as compared with the case where the valve opening degrees are manually adjusted. Therefore, the dehumidification apparatus 100 can be activated efficiently and reliably. That is, it is possible to improve the efficiency of work of introducing pressure into the dehumidifier 12 at the activation time of the hydrogen production equipment 1.

In the above-described embodiment, during the period from time t0 to time t2, the opening degree of the inlet valve 16 is adjusted so that the pressure in the adsorption tower 13 is increased to the first pressure P1 at the prescribed pressure increase rate with the outlet valves 20 being closed, whereby the pressure in the adsorption tower 13 can be quickly increased. Further, during the period from time t2 to time t3, the pressure in the adsorption tower 13 is maintained at the first pressure P1 until the dew point reaches the prescribed value, and therefore the supply of the hydrogen gas from the dehumidifier 12 can be quickly started when the dew point of the hydrogen gas in the adsorption tower 13 reaches the prescribed value.

In the above-described embodiment, at the activation time of the dehumidifier 12, during the period from time t3 to time t4 after the pressure in the adsorption tower 13 is maintained at the first pressure P1 until the dew point reaches the prescribed value, the first vent valve 24 provided in the first vent line 22 branched from the inlet line 14 is closed and the opening degree of the outlet valve 20 is adjusted to maintain the pressure in the adsorption tower 13 at the first pressure P1, and therefore the supply of the hydrogen gas dehumidified by the dehumidifier 12 can be quickly started.

In some embodiments, when the pressure in the adsorption tower 13 is to be increased to the first pressure P1 (time t0 to time t2 in FIG. 2) as described above, the opening degree of the inlet valve 16 may be adjusted in such a manner that the pressure in the adsorption tower 13 may first be increased to a second pressure P2 smaller than the first pressure P1 (time t0 to time t1 in FIG. 2) over a prescribed length of time ΔT1, and then the pressure in the adsorption tower 13 may be increased to the first pressure P1 over a prescribed length of time ΔT2 (time t1 to t2 in FIG. 2).

Alternatively, in some embodiments, when the pressure in the adsorption tower 13 is to be increased to the first pressure P1 (time t0 to time t2 in FIG. 2) as described above, the opening degree of the inlet valve 16 may be adjusted in such a manner that the pressure in the adsorption tower 13 may first be increased to the second pressure P2 smaller than the first pressure P1 (time t0 to time t1 in FIG. 2) at a second pressure increase rate, and then may be increased to the first pressure P1 at a first pressure increase rate larger than the second pressure increase rate (time t1 to t2 in FIG. 2). In the example depicted in FIG. 2, the above-mentioned second pressure increase rate is (t1 - t0)/ΔT1, and the above-mentioned first pressure increase rate is (t2 - t1)/ΔT2.

In the above-described embodiment, when the dehumidifier 12 is activated, the pressure in the adsorption tower 13 is first increased to the second pressure P2 at the relatively small second pressure increase rate. Accordingly, floating of the adsorbent, which is likely to occur in a state where the adsorbent has insufficiently adsorbed moisture, can be suppressed. In addition, since the pressure in the adsorption tower 13 is increased to the first pressure P1 at the relatively large first pressure increase rate after a certain amount of moisture is adsorbed by the adsorbent, the pressure in the adsorption tower 13 can be quickly increased. This makes it possible to quickly activate the hydrogen production equipment 1 while suppressing malfunction of devices (clogging of pipes, abnormality of pressure sensors, or the like) due to the floating of the adsorbent.

The contents described in each of the above embodiments are understood as follows, for example.

(1) The dehumidification apparatus (100) according to at least one embodiment of the present invention is a dehumidification apparatus configured to dehumidify a hydrogen gas produced by the hydrogen production device (10), the dehumidification apparatus including:
   the dehumidifier (12) including the adsorption tower (13), in which an adsorbent capable of adsorbing moisture contained in the hydrogen gas is provided;
   the inlet line (14) configured to introduce the hydrogen gas from the hydrogen production device into the dehumidifier;
   the inlet valve (16) provided in the inlet line;
   the outlet line (18) configured to discharge the hydrogen gas dehumidified by the dehumidifier, from the dehumidifier;
   the outlet valve (20) provided in the outlet line; and
   the control device (32) configured to adjust an opening degree of the inlet valve and an opening degree of the outlet valve based on pressure in the adsorption tower at an activation time of the dehumidification apparatus.
   According to the configuration of (1) described above, since the opening degrees of the inlet valve and the outlet valve provided in the inlet line and the outlet line, respectively, and connected to the dehumidifier are adjusted by the control device, the pressure can be introduced into the dehumidifier efficiently and reliably as compared with the case where the valve opening degrees are manually adjusted. Therefore, the dehumidification apparatus can be activated efficiently and reliably. That is, it is possible to improve the efficiency of work of introducing pressure into the dehumidifier at the activation time of the hydrogen production equipment.
(2) In some embodiments, in the configuration of (1) described above,
   the control device is configured to adjust the opening degree of the inlet valve and the opening degree of the outlet valve based on the pressure in the adsorption tower and a dew point of the hydrogen gas discharged from the adsorption tower at the activation time of the dehumidification apparatus.
   With the configuration of (2) described above, since the opening degrees of the inlet valve and the outlet valve are adjusted based on the pressure in the adsorption tower and the dew point of the hydrogen gas discharged from the adsorption tower, it is possible to appropriately start the supply of the hydrogen gas from the dehumidifier to a storage unit, hydrogen consumption equipment, or the like in accordance with the dew point of the hydrogen gas in the adsorption tower. This makes it possible to efficiently operate the hydrogen production equipment.
(3) In some embodiments, in the configuration of (2) described above,
   at the activation time of the dehumidifier, the control device is configured to:
   adjust the opening degree of the inlet valve so that the pressure in the adsorption tower is increased to the prescribed first pressure (P1) at a prescribed pressure increase rate in a state where the outlet valve is closed; and
   subsequently adjust the opening degree of the inlet valve so that the pressure in the adsorption tower is maintained at the first pressure until the dew point decreases down to a prescribed value in a state where the outlet valve is closed.
   According to the configuration of (3) described above, the opening degree of the inlet valve is adjusted so that the pressure in the adsorption tower is increased to the first pressure at the prescribed pressure increase rate with the outlet valves being closed, whereby the pressure in the adsorption tower can be quickly increased. Further, the pressure in the adsorption tower is maintained at the first pressure (for example, pressure at the normal operation time of the hydrogen production equipment) until the dew point reaches the prescribed value, and therefore the supply of the hydrogen gas from the dehumidifier can be quickly started when the dew point of the hydrogen gas in the adsorption tower reaches the prescribed value.
(4) In some embodiments, in the configuration of (3) described above,
   at the activation time of the dehumidifier, the control device is configured to adjust the opening degree of the inlet valve in such a manner that the pressure in the adsorption tower is increased at the second pressure increase rate to the second pressure (P2) smaller than the first pressure in a state where the outlet valve is closed, and subsequently the pressure in the adsorption tower is increased to the first pressure at the first pressure increase rate larger than the second pressure increase rate.
   According to the configuration of (4) described above, when the dehumidifier is activated, the pressure in the adsorption tower is first increased to the second pressure at the relatively small second pressure increase rate. Therefore, floating of the adsorbent can be suppressed. Subsequently, since the pressure in the adsorption tower is increased to the first pressure at the relatively large first pressure increase rate, the pressure in the adsorption tower can be quickly increased. This makes it possible to quickly activate the hydrogen production equipment while suppressing malfunction of devices (clogging of pipes, abnormality of pressure sensors, or the like) due to the floating of the adsorbent.
(5) In some embodiments, in the configuration of (3) or (4) described above,
   the dehumidification apparatus includes
   the first vent line (22) branched from the inlet line and configured to release the hydrogen gas from the inlet line to the outside, and
   the first vent valve (24) provided in the first vent line, and
   the control device is configured to adjust the opening degree of the outlet valve in such a manner that, when the dew point has reached the prescribed value, the first vent valve is closed and the pressure in the adsorption tower is maintained at the first pressure at the activation time of the dehumidifier.
   In the configuration of (5) described above, at the activation time of the dehumidifier, after the pressure in the adsorption tower is maintained at the first pressure until the dew point reaches the prescribed value, the first vent valve provided in the first vent line branched from the inlet line is closed, and the opening degree of the outlet valve is adjusted to maintain the pressure in the adsorption tower at the first pressure. Accordingly, the supply of the hydrogen gas dehumidified by the dehumidifier can be quickly started.
(6) In some embodiments, in the configuration of (5) described above,
   the control device is configured to adjust the opening degree of the outlet valve in such a manner that, when the dew point has reached the prescribed value, the first vent valve is closed over a prescribed length of time and the pressure in the adsorption tower is maintained at the first pressure at the activation time of the dehumidifier.
   According to the configuration of (6) described above, at the activation time of the dehumidifier, after the dew point reaches the prescribed value, the first vent valve is closed over the prescribed length of time, and the opening degree of the outlet valve is adjusted to maintain the pressure in the adsorption tower at the first pressure. Accordingly, the supply of the hydrogen gas dehumidified by the dehumidifier can be quickly started.
(7) In some embodiments, in any one of the configurations of (1) to (6) described above,
   the dehumidification apparatus includes the pressure measuring unit (34) configured to measure the pressure in the adsorption tower, and
   the control device is configured to adjust the opening degree of the inlet valve and the opening degree of the outlet valve based on the measured value of the pressure in the adsorption tower by the pressure measuring unit.
   With the configuration of (7) described above, since the opening degrees of the inlet valve and the outlet valve are adjusted based on the measured value of the pressure in the adsorption tower by the pressure measuring unit, it is possible to efficiently and reliably introduce the pressure into the dehumidifier at the time of activating the dehumidification apparatus. Therefore, the dehumidification apparatus can be activated efficiently and reliably. That is, it is possible to improve the efficiency of work of introducing pressure into the dehumidifier at the activation time of the hydrogen production equipment.
(8) In some embodiments, in any one of the configurations of (1) to (7) described above,
   the dehumidification apparatus includes the dew point measuring unit (36) configured to measure the dew point of the hydrogen gas discharged from the adsorption tower, and
   the control device is configured to adjust the opening degree of the inlet valve and the opening degree of the outlet valve based on the measured value of the dew point by the dew point measuring unit.
   With the configuration of (8) described above, since the opening degrees of the inlet valve and the outlet valve are adjusted based on the measured value of the dew point by the dew point measuring unit, it is possible to appropriately start the supply of the hydrogen gas from the dehumidifier to a storage unit, hydrogen consumption equipment, or the like in accordance with the dew point of the hydrogen gas in the adsorption tower at the activation time of the dehumidification apparatus. This makes it possible to efficiently operate the hydrogen production equipment.
(9) In some embodiments, in the configuration of (1) described above,
   the dew point measuring unit is configured to measure the dew point of the hydrogen gas guided to the dew point measurement line (26) branched from the outlet line at the upstream side of the outlet valve, and
   the dehumidification apparatus is configured to release the hydrogen gas flowing through the dew point measurement line to the outside.
   With the configuration of (9) described above, since the dew point measuring unit is configured to measure the dew point of the hydrogen gas guided to the dew point measurement line branched from the outlet line, it is possible to appropriately measure the dew point of the hydrogen gas discharged from the dehumidifier.
(10) The hydrogen production equipment (1) according to at least one embodiment of the present invention includes:
   the hydrogen production device (10); and
   the dehumidification apparatus (100) according to any one of (1) to (9) described above configured to dehumidify a hydrogen gas produced by the hydrogen production device.
   According to the configuration of (10) described above, since the opening degrees of the inlet valve and the outlet valve provided in the inlet line and the outlet line, respectively, and connected to the dehumidifier are adjusted by the control device, the pressure can be introduced into the dehumidifier efficiently and reliably as compared with the case where the valve opening degrees are manually adjusted. Therefore, the dehumidification apparatus can be activated efficiently and reliably. That is, it is possible to improve the efficiency of work of introducing pressure into the dehumidifier at the activation time of the hydrogen production equipment.
(11) The method for operating a dehumidification apparatus according to at least one embodiment of the present invention is a method for operating the dehumidification apparatus (100) configured to dehumidify a hydrogen gas produced by the hydrogen production device (10), the dehumidification apparatus including
   the dehumidifier (12) including the adsorption tower (13), in which an adsorbent capable of adsorbing moisture contained in the hydrogen gas is provided,
   the inlet line (14) configured to introduce the hydrogen gas from the hydrogen production device into the dehumidifier,
   the inlet valve (16) provided in the inlet line,
   the outlet line (18) configured to discharge the hydrogen gas dehumidified by the dehumidifier, from the dehumidifier, and
   the outlet valve (20) provided in the outlet line, the method including:
      measuring pressure in the adsorption tower; and
      activating the dehumidification apparatus while adjusting an opening degree of the inlet valve and an opening degree of the outlet valve based on the pressure in the adsorption tower.

According to the configuration of (11) described above, since the opening degrees of the inlet valve and the outlet valve provided in the inlet line and the outlet line, respectively, and connected to the dehumidifier are adjusted by the control device, the pressure can be introduced into the dehumidifier efficiently and reliably as compared with the case where the valve opening degrees are manually adjusted. Therefore, the dehumidification apparatus can be activated efficiently and reliably. That is, it is possible to improve the efficiency of work of introducing pressure into the dehumidifier at the activation time of the hydrogen production equipment.

The embodiments of the present invention have been described thus far. However, the present invention is not limited to the above-described embodiments, and includes forms obtained by modifying the above-described embodiments and forms obtained by appropriately combining these forms.

In the present specification, an expression of a relative or absolute arrangement, such as "in a direction", "along a direction", "parallel", "orthogonal", "centered", "concentric" or "coaxial" shall not be construed as indicating the arrangement only in a strict literal sense, but also construed as expressing a state where the arrangement is relatively displaced by a tolerance, or by an angle or a distance to an extent with which the same function can be achieved.

For instance, an expression of a state in which features are equal, such as "same", "equal", and "uniform" shall not be construed as indicating only a state where the features are equal in a strict literal sense, but also construed as expressing a state where there is a tolerance or a difference to an extent with which the same function can be achieved.

Further, in the present specification, an expression indicating a shape such as a rectangular shape or a cylindrical shape shall not be construed as indicating only a shape such as a rectangular shape or a cylindrical shape in a strict geometrical sense, but also as indicating a shape including a depression, a protrusion, a chamfered portion, or the like to the extent that the same effect can be obtained.

Furthermore, in the present specification, an expression such as "comprising" "including" or "having" one constituent element is not intended to be an exclusive expression that excludes the presence of other constituent elements.

### Reference Signs List

1 Hydrogen production equipment
10 Hydrogen production device
12 Dehumidifier
13 Adsorption tower
14 Inlet line
16 Inlet valve
18 Outlet line
20 Outlet valve
22 First vent line
24 First vent valve
26 Dew point measurement line
28 Second vent line
30 Second vent valve
32 Control device
34 Pressure measuring unit
36 Dew point measuring unit
100 Dehumidification apparatus

## Claims

1. A dehumidification apparatus configured to dehumidify a hydrogen gas produced by a hydrogen production device, the dehumidification apparatus comprising:
a dehumidifier including an adsorption tower in which an adsorbent capable of adsorbing moisture contained in the hydrogen gas is provided;
an inlet line configured to introduce the hydrogen gas from the hydrogen production device into the dehumidifier;
an inlet valve provided in the inlet line;
an outlet line configured to discharge the hydrogen gas dehumidified by the dehumidifier, from the dehumidifier;
an outlet valve provided in the outlet line; and
a control device configured to adjust an opening degree of the inlet valve and an opening degree of the outlet valve based on pressure in the adsorption tower at an activation time of the dehumidification apparatus.

2. The dehumidification apparatus according to claim 1, wherein
the control device is configured to adjust the opening degree of the inlet valve and the opening degree of the outlet valve based on the pressure in the adsorption tower and a dew point of the hydrogen gas discharged from the adsorption tower at the activation time of the dehumidification apparatus.

3. The dehumidification apparatus according to claim 2, wherein
at an activation time of the dehumidifier, the control device is configured to
adjust the opening degree of the inlet valve so that the pressure in the adsorption tower is increased to a prescribed first pressure at a prescribed pressure increase rate in a state where the outlet valve is closed, and
subsequently adjust the opening degree of the inlet valve so that the pressure in the adsorption tower is maintained at the first pressure until the dew point decreases down to a prescribed value in a state where the outlet valve is closed.

4. The dehumidification apparatus according to claim 3, wherein
at the activation time of the dehumidifier, the control device is configured to adjust the opening degree of the inlet valve in such a manner that the pressure in the adsorption tower is increased at a second pressure increase rate to a second pressure smaller than the first pressure in a state where the outlet valve is closed, and subsequently the pressure in the adsorption tower is increased to the first pressure at a first pressure increase rate larger than the second pressure increase rate.

5. The dehumidification apparatus according to claim 3 or 4, further comprising:
a first vent line branched from the inlet line and configured to release the hydrogen gas from the inlet line to the outside; and
a first vent valve provided in the first vent line, wherein
the control device is configured to adjust the opening degree of the outlet valve in such a manner that, when the dew point has reached the prescribed value, the first vent valve is closed and the pressure in the adsorption tower is maintained at the first pressure at the activation time of the dehumidifier.

6. The dehumidification apparatus according to claim 5, wherein
the control device is configured to adjust the opening degree of the outlet valve in such a manner that, when the dew point has reached the prescribed value, the first vent valve is closed over a prescribed length of time and the pressure in the adsorption tower is maintained at the first pressure at the activation time of the dehumidifier.

7. The dehumidification apparatus according to any one of claims 1 to 4, further comprising:
a pressure measuring unit configured to measure the pressure in the adsorption tower, wherein
the control device is configured to adjust the opening degree of the inlet valve and the opening degree of the outlet valve based on a measured value of the pressure in the adsorption tower by the pressure measuring unit.

8. The dehumidification apparatus according to any one of claims 1 to 4, further comprising:
a dew point measuring unit configured to measure the dew point of the hydrogen gas discharged from the adsorption tower, wherein
the control device is configured to adjust the opening degree of the inlet valve and the opening degree of the outlet valve based on a measured value of the dew point by the dew point measuring unit.

9. The dehumidification apparatus according to claim 8, wherein
the dew point measuring unit is configured to measure the dew point of the hydrogen gas guided to a dew point measurement line branched from the outlet line at an upstream side of the outlet valve, and
the dehumidification apparatus is configured to release the hydrogen gas flowing through the dew point measurement line to the outside.

10. Hydrogen production equipment, comprising:
a hydrogen production device; and
the dehumidification apparatus according to any one of claims 1 to 4 configured to dehumidify a hydrogen gas produced by the hydrogen production device.

11. A method for operating a dehumidification apparatus configured to dehumidify a hydrogen gas produced by a hydrogen production device, the dehumidification apparatus including
a dehumidifier including an adsorption tower in which an adsorbent capable of adsorbing moisture contained in the hydrogen gas is provided,
an inlet line configured to introduce the hydrogen gas from the hydrogen production device into the dehumidifier,
an inlet valve provided in the inlet line,
an outlet line configured to discharge the hydrogen gas dehumidified by the dehumidifier, from the dehumidifier, and
an outlet valve provided in the outlet line, the method comprising:
measuring pressure in the adsorption tower; and
activating the dehumidification apparatus while adjusting an opening degree of the inlet valve and an opening degree of the outlet valve based on the pressure in the adsorption tower.
